# EUROPÄISCHE PATENTANMELDUNG

(11) **EP 1 201 342 A1**
(43) Veröffentlichungstag der Anmeldung: **02.05.2002**
(21) Anmeldenummer: 01119465.1
(22) Anmeldetag: 13.08.2001
(51) Int. Cl.: B23B 47/28, B23B 49/00

(54) **Bohrlehre**

(30) Priorität: 05.10.2000 DE 20017146 U
(71) Anmelder: Arturo Salice S.p.A., I-22060 Novedrate (Como) (IT)
(72) Erfinder:
(74) Vertreter: Gossel, Hans K., Dipl.-Ing.

(57) **Zusammenfassung**

Eine Bohrlehre zum Bohren von Sacklöchern vorbestimmter Tiefe in plattenförmige Teile (15), vorzugsweise in Möbelteile, weist Bezugskanten bildende Stirnseiten auf. Um an vorbestimmten Stellen plattenförmiger Teile Sacklochbohrungen (17) vorbestimmter Tiefe anbringen zu können, ist ein an die Stirnseiten anlegbarer Anschlagkörper (1) vorgesehen, der mit Einrichtungen zum Befestigen an den plattenförmigen Teilen versehen ist. Der Anschlagkörper weist eine mit dem zu bohrenden Sackloch fluchtende Bohrung (3) zum Einführen des Bohrers auf, auf deren äußeren Rand sich ein an dem Schaft des Bohrers angebrachtes Anschlagteil abstützt, das die Eindringtiefe des Bohrers bestimmt.

## Beschreibung

Die Erfindung betrifft eine Bohrlehre zum Bohren von Sacklöchern vorbestimmter Tiefe in plattenförmige Teile, vorzugsweise in Möbelteile, mit Bezugskanten bildenden Stirnseiten.

Plattenförmige Teile und insbesondere Möbelteile müssen häufig mit Beschlagteilen wie beispielsweise Scharnieren oder Stopp- und Abbremseinrichtungen versehen werden. Derartige Beschlagteile werden üblicherweise mit den aus Holz und/oder Kunststoff oder Spanplatten bestehenden Teilen verschraubt. Um die Befestigungslöcher nicht umständlich vorher anzeichnen zu müssen, werden üblicherweise Bohrlehren zum Vorbohren der Befestigungslöcher verwendet. Ein besonderes Problem entsteht zusätzlich dann, wenn Sacklöcher vorbestimmter Tiefe gebohrt werden müssen. Derartige Sacklöcher vorbestimmter Tiefe müssen beispielsweise dann in Möbelteile gebohrt werden, wenn diese der Halterung von Bremsvorrichtungen der aus DE 299 10 626 U1 bestimmten Art dienen.

Aufgabe der Erfindung ist es daher, eine Bohrlehre der eingangs angegebenen Art zu schaffen, mit der sich an vorbestimmten Stellen plattenförmiger Teile Sacklochbohrungen vorbestimmter Tiefe anbringen lassen.

Erfindungsgemäß wird diese Aufgabe bei einer Bohrlehre der eingangs angegebenen Art durch einen an die Stirnseiten der plattenförmigen Teile anlegbaren Anschlagkörper gelöst, der mit Einrichtungen zum Befestigen an den Teilen versehen ist und eine mit dem zu bohrenden Sackloch fluchtende Bohrung zum Einführen eines Bohrers aufweist, auf dessen äußerem Rand sich ein an dem Schaft des Bohrers angebrachtes Anschlagteil abstützt, das die Eindringtiefe des Bohrers bestimmt.

Die erfindungsgemäße Bohrlehre läßt sich einmal lagerichtig an dem plattenförmigen Teil befestigen, so daß sich die Sacklochbohrung an der vorbestimmten Stelle bohren läßt. Zum anderen stellt die erfindungsgemäße Bohrlehre sicher, daß die Sacklochbohrung in der vorbestimmten Tiefe ausgeführt wird.

Zweckmäßigerweise ist der Anschlagkörper mit einem stutzenartigen, von der Bohrung durchsetzten Kragen versehen, dessen Rand ein Widerlager für das Anschlagteil bildet. Das Anschlagteil selbst kann aus einem in einer Querbohrung des Schafts des Bohrers gehalterten Stift bestehen. Nach einer anderen Ausführungsform könnte der Bohrer auch mit einem die Eindringtiefe begrenzenden Ringbund versehen sein.

Die Eindringtiefe des Bohrers läßt sich zusätzlich auch durch einen oder mehrere auf den Bohrer aufschiebbaren Ring bzw. Ringe variieren.

Nach einer bevorzugten Ausführungsform, die das Anbringen von Sacklochbohrungen an den schmalen Stirnseiten von plattenförmigen Teilen ermöglicht, ist vorgesehen, daß der Anschlagkörper rechtwinkelig an seine Anschlagfläche anschließende Seiten aufweist, die mit diese überragenden Klemmbacken versehen sind, von denen eine durch Schrauben oder Spindeln bewegbar ist. Durch die durch Schrauben oder Spindeln bewegbare Klemmbacke läßt sich die Bohrlehre lagerichtig an das mit einer Bohrung zu versehende plattenförmige Teil nach Art einer Schraubzwinge anklemmen.

Zweckmäßigerweise besteht die eine Klemmbacke aus einer mit zwei Gewindebohrungen versehenen Platte, wobei in die beiden Gewindebohrungen Schraubbolzen mit Betätigungsknöpfen eingeschraubt sind, deren Schäfte in dem Anschlagkörper drehbar, aber in axialer Richtung unverschieblich gehaltert sind.

Die Klemmbacke kann nach einer anderen Ausführung auch zwei Bohrungen aufweisen, die von in dem Anschlagkörper eingeschraubten Schraubbolzen durchsetzt sind.

Die andere Klemmbacke kann mit dem Anschlagkörper verschraubt sein. Um den Abstand der anzubringenden Sacklochbohrung von einer Kante der Stirnseite zentrieren oder ändern zu können, ist in weiterer Ausgestaltung der Erfindung vorgesehen, daß die andere Klemmbacke eine mit der Anlagefläche des Anschlagkörpers in etwa fluchtende Stufe aufweist.

Ausführungsbeispiele der Erfindung werden nachstehend anhand der Zeichnung näher erläutert. In dieser zeigt
- Fig. 1: eine Draufsicht auf eine an den Rand einer Stirnseite eines plattenförmigen Teils angeklemmte Bohrlehre,
- Fig. 2: eine Seitenansicht der an eine Platte angeklemmten Bohrlehre nach Fig. 1,
- Fig. 3: eine Ansicht auf die Bohrlehre nach den Fig. 1 und 2 in Richtung auf deren Anlagefläche,
- Fig. 4: eine Seitenansicht der Bohrlehre nach Fig. 3, bei der die obere Klemmbacke mit einer Stufe versehen ist, und
- Fig. 5: einen mit einem Anschlagstift versehenen Bohrer.

Die in der Zeichnung dargestellte Bohrlehre besteht aus einem etwa quaderförmigen Anschlagkörper 1 aus Metall oder Kunststoff, der auf seiner seiner Anschlagfläche 2 gegenüberliegenden Seite mit einem stutzenförmigen Kragen 3 versehen ist, der mit einer Bohrung versehen ist, die die Bohrung 4 des Anschlagkörpers 1 verlängert. Der mit dem stutzenartigen Kragen 3 versehene Anschlagkörper 1 ist zu seiner Quermittelebene, die mit einer Durchmesserebene der Bohrung 4 zusammenfällt, symmetrisch ausgebildet.

Mit der Oberseite des Anschlagkörpers 1 ist durch zwei Befestigungsschrauben 5, 6 eine aus einer rechteckigen Platte bestehende Klemmbacke 7 verschraubt, die die Anschlagfläche 2 des Anschlagkörpers 1 überragt.

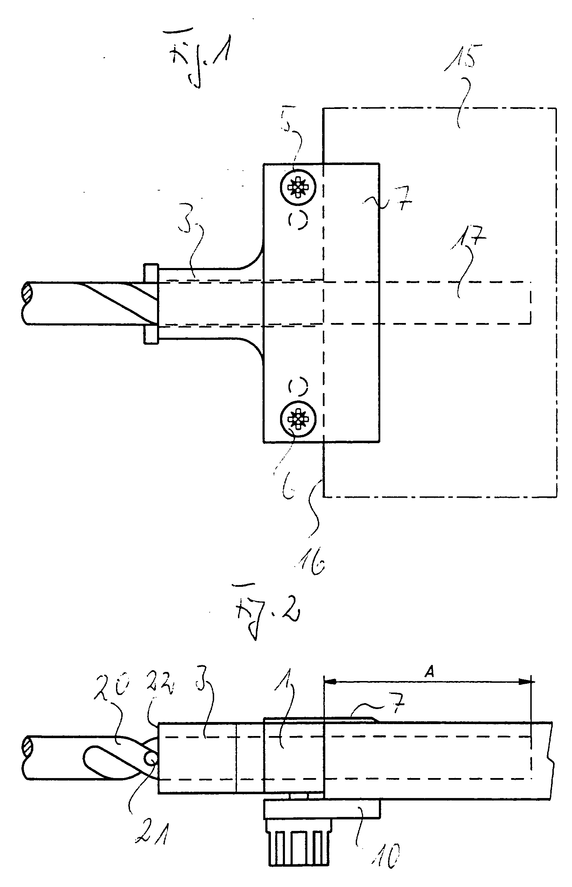

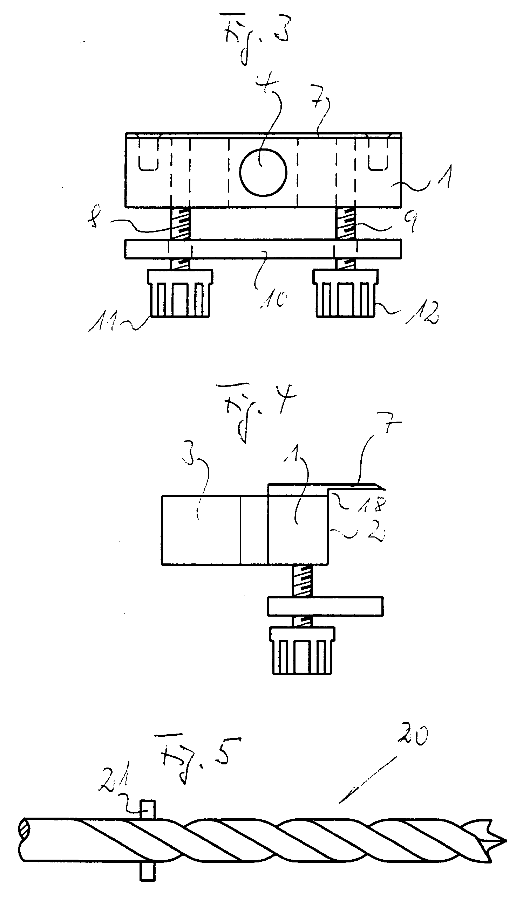

Auf seiner der Klemmbacke 7 gegenüberliegenden Seite ist der Anschlagkörper 1 mit Gewindebohrungen versehen, in denen Schraubbolzen 8, 9 eingeschraubt sind. Auf die durchgehenden Bohrungen einer Klemmbacke 10, die ebenfalls aus einer rechteckigen Platte besteht, durchsetzenden äußeren Enden der Schraubbolzen 8, 9 sind Betätigungsknöpfe 11, 12 aufgesetzt. Durch gleichzeitiges Drehen der Knöpfe 11, 12 läßt sich die Klemmbacke 10 schraubzwingenartig an die Klemmbacke 7 annähern, so daß sich die Bohrlehre in der aus den Fig. 1 und 2 ersichtlichen Weise an ein plattenförmiges Teil 15 anklemmen läßt. Soll das plattenförmige Teil 15 in seiner Stirnseite 16 mit einer Sacklochbohrung 17 vorbestimmter Tiefe A versehen werden, wird die Bohrlehre an die Stirnseite 16 mit ihrer Anschlagfläche 2 derart angelegt, daß die Bohrung 4 an der Stelle liegt, an der die Sacklochbohrung 17 auszuführen ist. In dieser Stellung werden sodann die Knöpfe 11, 12 zum Anklemmen der Klemmbacken 7, 10 an das plattenförmige Teil 15 gedreht.

Bei der Ausführungsform der Bohrlehre nach Fig. 4 ist die obere Klemmbacke 7 mit einer Stufe 18 versehen, die in der Ebene der Anschlagfläche 2 des Anschlagkörpers 1 liegt. Die Höhe der Stufe 18 kann zum Zentrieren oder Ausrichten der in die Stirnseite 16 des plattenförmigen Teils anzubringenden Sacklochbohrung 17 verändert werden.

Der Durchmesser der Bohrung 4 ist dem Durchmesser des Bohrers 20 angepaßt. Der Bohrer 20 ist mit.einer Querbohrung in seinem Schaft versehen, in der ein Stift 21 gehaltert ist, der sich zur Bestimmung der Tiefe der Sacklochbohrung 17 auf den Rand 22 des stutzenartigen Kragens 3 abstützt. Die Stelle, an der der Stift 21 an dem Schaft des Bohrers 20 angeordnet ist, bestimmt aufgrund der Geometrie der Bohrlehre die Tiefe A der Sacklochbohrung 17.

## Patentansprüche

1. Bohrlehre zum Bohren von Sacklöchern (17) vorbestimmter Tiefe in plattenförmige Teile, vorzugsweise in Möbelteile (15), mit Bezugskanten bildenden Stirnseiten (16),
**gekennzeichnet durch**
einen an die Stirnseiten (16) anlegbaren Anschlagkörper (1), der mit Einrichtungen zum Befestigen an den plattenförmigen Teilen versehen ist und eine mit dem zu bohrenden Sackloch (17) fluchtende Bohrung (4) zum Einführen eines Bohrers (20) aufweist, auf deren äußeren Rand (22) sich ein an dem Schaft des Bohrers (20) angebrachtes Anschlagteil (21) abstützt, das die Eindringtiefe des Bohrers (20) bestimmt.

2. Bohrlehre nach Anspruch 1, **dadurch gekennzeichnet, daß** der Anschlagkörper (1) mit einem stutzenartigen, von der Bohrung (4) durchsetzten Kragen (3) versehen ist, dessen Rand (22) ein Widerlager für das Anschlagteil (21) bildet.

3. Bohrlehre nach Anspruch 1 oder 2, **dadurch gekennzeichnet, daß** das Anschlagteil aus einem in einer Querbohrung des Schafts des Bohrers (20) gehalterten Stift (21) besteht.

4. Bohrlehre nach einem der Ansprüche 1 bis 3, **dadurch gekennzeichnet, daß** ein oder mehrere auf den Bohrer (20) aufschiebbarer Ring bzw. Ringe vorgesehen sind.

5. Bohrlehre nach einem der Ansprüche 1 bis 4, **dadurch gekennzeichnet, daß** der Anschlagkörper (1) rechtwinkelig an seine Anlagefläche (2) anschließende Seiten aufweist, die mit diese überragenden Klemmbacken (7, 10) versehen sind, von denen eine (10) durch Schrauben (8, 9) oder Spindeln bewegbar ist.

6. Bohrlehre nach Anspruch 5, **dadurch gekennzeichnet, daß** die eine Klemmbacke aus einer mit zwei Gewindebohrungen versehenen Platte (10) besteht und daß in die Gewindebohrungen Schraubbolzen (8, 9) mit Betätigungsköpfen (11, 12) eingeschraubt sind, deren Schäfte in dem Anschlagkörper (1) drehbar, aber in axialer Richtung unverschieblich gehaltert sind.

7. Bohrlehre nach Anspruch 5, **dadurch gekennzeichnet, daß** die Schrauben (8, 9) in dem Anschlagkörper (1) drehbar, eingeschraubt sind und durchgehende Bohrungen der Klemmbacke (10) durchsetzen.

8. Bohrlehre nach einem der Ansprüche 1 bis 7, **dadurch gekennzeichnet, daß** die andere Klemmbacke (7) mit dem Anschlagkörper (1) verschraubt ist.

9. Bohrlehre nach einem der Ansprüche 1 bis 8, **dadurch gekennzeichnet, daß** die andere Klemmbacke (7) eine mit der Anlagefläche (2) des Anschlagkörpers (1) in etwa fluchtende Stufe (18) aufweist.
